# EUROPEAN PATENT APPLICATION

(11) **EP 2 477 037 A1**
(43) Date of publication of application: **18.07.2012**
(21) Application number: 11305031.4
(22) Date of filing: 12.01.2011
(51) Int. Cl.: G01Q 30/02

(54) **Optical component for integrating the optical microscopy into the atomic force microscopy maintaining maximal performance of the atomic force microscopy.**

(71) Applicant: Institut Curie, 75005 Paris (FR)
(72) Inventor: Scheuring, Simon, 75018, PARIS (FR); Casuso, Ignacio, 75003, PARIS (FR)
(74) Representative: Kingolo, Alain

(57) **Abstract**

The invention concerns a device combining atomic force microscope AFM techniques with optical imaging techniques. Said device comprising:
- a light source (48) and a light detector (50) for optically imaging a sample (41),
- a sample holder (42) disposed in the light path between the light source and the sample,
- an AFM cantilever (40) for measuring the topography of the sample laid (41) on a side of the sample holder (42),
- an AFM measuring means (45, 46) for measuring the cantilever (40) variations,
- a scanning means (43) for moving the sample holder (42) with respect to the AFM cantilever (40).

## Description

### BACKGROUND OF THE INVENTION

The present invention relates to a device combining atomic force microscope (AFM) techniques with optical imaging techniques such as optical microscope, particularly fluorescence microscope.

Atomic Force Microscopy is a very high resolution type of scanning probe microscopy. A sharp tip mounted at an end of a cantilever is used to scan a sample surface. It has the ability to capture topographical maps of surfaces in either air or liquid with subnanometer resolution. When the tip is brought into proximity of a sample surface, forces between the tip and the sample lead to a deflection on the cantilever.

The detection system used in AFM concerns a laser reflected off of the back of the cantilever and read on a detector as the cantilever is scanned to measure the topography of the sample.

The integration of the AFM with light microscopy yields numerous benefits, it allows combining the potential of topographic imaging and mechanical characterization from the AFM with the high selectivity and analytical capabilities on biomolecules of the light microscopy. It also allows precise positioning of the tip on an area of interest on the sample. In the market, there exists several (non high-speed) microscopes that combine AFM and light microscopy, these combined microscopes typically use an AFM systems located on top of standard commercial inverted optical microscope.

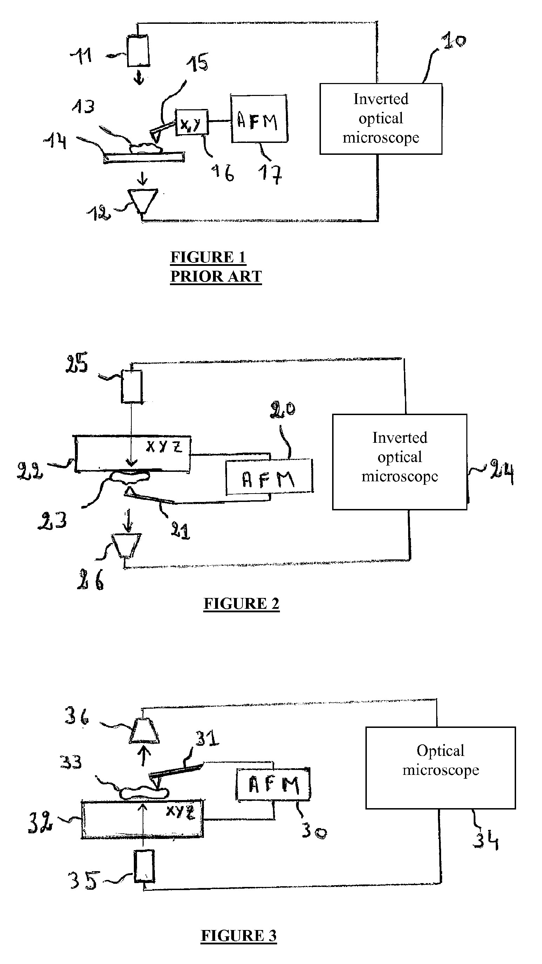

Figure 1 shows an inverted optical microscope 10 in which an AFM structure is integrated. The optical microscope 10 is equipped with a light source 11 disposed above the sample 13 to image, and a photodetector 12 disposed below the sample. A sample holder 14, carrying the sample 13, is arranged between the sample and the photodetector 12. The AFM structure comprises a cantilever 15 which is intended to measure interactions between the cantilever's tip and the surface of the sample, and to scan the surface of the sample. A processing unit 17 monitors the cantilever 15 by means of a scanner 16.

Therefore, the integration of the AFM on top of an inverted light microscope results in a "table top" configuration, which is not the best configuration from the point of view of AFM performance.

However, the tip-scanning device as described in figure 1 does not allow a high speed AFM.

The prior art document EP 0 527 448 discloses an atomic force microscope combined with an optical microscope. The cantilever is disposed below the objective of the optical microscope. The imaging source and detector of the optical microscope together with the cantilever are disposed above the sample. The light source of the optical microscope coming from the objective illuminates directly the sample which is carried by a scanning device. The disclosed structure needs a complex realisation, which may be expensive.

An object of the present invention is to provide a new device combining a high speed AFM with an optical microscope. Another object of the invention is to minimize the production cost.

### SUMMARY OF THE INVENTION

Accordingly, it is an object of certain embodiments of the invention to provide a device combining atomic force microscope AFM techniques with optical imaging techniques such as optical microscope, particularly fluorescence microscope, said device comprising:
- a sample holder,
- an AFM cantilever for measuring the topography of a sample laid on a first side of the sample holder,
- an AFM measuring means for measuring the cantilever variations or deviations,
- a light source and a light detector for optically imaging the sample.

According to the present invention:
- the device comprises a scanning means for moving the sample holder with respect to the AFM cantilever in order to perform the AFM measurements by acquiring an image based on physical interaction, the tip of the cantilever analyzing and
- the sample holder is disposed in the light path between the light source and the sample.

Thus, the light source illuminates the sample via the sample holder, not directly as in prior art. The light from source passes through the sample holder before reaching the sample.

The combination of these two techniques according to the present invention permits to maintain the best possible AFM performance, in this case for the high speed AFM measurement. The invention allows integrating the AFM with the light microscopy using the optimal independent top/bottom AFM configuration. Indeed, the present invention concerns a holder scanning technique, the cantilever being substantially still, moving only due to interaction with the sample.

The AFM measuring means may comprise a laser source to illuminate the AFM cantilever and a photodetector to detect light coming from the cantilever. It is possible to use other technique than laser deflection on the cantilever, such as piezoresistive cantilevers, ...

Advantageously, the sample holder is selected as a component which is able to let light from the light source passing through it.

Consequently, according to a first embodiment of the present invention, the light source may be arranged so that the light of said light source enters the sample holder from the opposite side to said first side. The light exits the sample holder from said first side.

According to another embodiment of the present invention, the light source may be arranged so that the light of said light source enters the sample holder from a lateral side.

The sample holder may present different shapes such as a prism, a cylinder or a parallelepiped, or others. This variety of shapes allows different kinds of illumination including Bright Field and Total Internal Reflectance.

Advantageously, the sample holder may include an integrated mirror for deflecting the entering light which then exits the sample holder from said first side. For example and more precisely, the sample holder may be composed of two oppositely oriented prisms glued together, the interface between the two prisms being covered by a metal film that acts like a mirror. In this case, the light source emits a light which enters the sample holder on a lateral side, deflects on the mirror and exits via the first side, then through the sample. Therefore, this advantageous feature allows acquiring optical images of the sample while maintaining optimal AFM performance, in this case for performing high-speed AFM topographs.

For example, the mirror may deflect light from 0° to 180° (edges excluded), preferably at 90°. Thus, the light source may be disposed next to the sample holder in order to provide a compact device.

Advantageously, the light source and the sample holder may be arranged so that the light strikes according to a Total Internal Reflection the internal surface of said first side. The sample holder may include at least one mirror to deflect light inside the sample holder in order to achieve the Total Internal Reflection.

According to the invention, the sample holder may be integrated in the scanning means. In this case, the sample support is an integral part of the scanning means.

In order to obtain accurate images with a maximum of useful information, it is provided that the scanning means comprises three dimensional actuators. Said actuators may be piezoelectric actuators or others.

According to an embodiment of the present invention, the light source may be a fluorescence light source and the light detector a fluorescence camera, such as a CCD camera in order to directly obtain a fluorescence image of the sample. Specific filters to capture light of wavelengths of interest may be integrated in between the sample and the light detector.

The device according to the invention may be used by performing first an optical image in order to determine the area of interest, for example cells. Then, AFM imaging may be performed to obtain topographic images. It is possible to simultaneously perform optical and AFM imaging.

According to a preferred embodiment of the present invention, the AFM cantilever is arranged below the sample holder, the light source injecting light from a lateral side or opposite side to said first side of the sample holder.

These and various other advantages and features of novelty that characterize the invention are pointed out with particularity in the claims annexed hereto and forming a part hereof. However, for a better understanding of the invention, its advantages, and the objects obtained by its use, reference should be made to the drawings which form a further part hereof, and to the accompanying descriptive matter, in which there is illustrated and described a preferred embodiment of the invention.

### BRIEF DESCRIPTION OF THE DRAWINGS

Figure 1 is a schematic view illustrating a tip-scanning AFM integrated in a inverted optical microscope according to the prior art;
Figure 2 is a schematic view illustrating a top/down AFM combined with an inverted optical microscope according to the invention, top/down AFM configuration yields maximum AFM performance;
Figure 3 is a schematic view illustrating another top/down AFM combined with an optical microscope according to the invention;
Figure 4 is a schematic view illustrating a preferred embodiment of a high speed AFM combined with an inverted optical microscope according to the invention;
Figure 5 is a schematic view illustrating a piezoelectric scanner according to the invention; and
Figure 6 is a schematic view illustrating a Total Internal Reflection sample holder according to the invention.

### DETAILED DESCRIPTION OF THE PREFERRED EMBODIMENTS

While the invention is susceptible to various modifications and alternative forms, specific embodiments thereof are shown by way of example in the drawings and will herein be described in detail. It should be understood, however, that the drawings and detailed description thereto are not intended to limit the invention to the particular form disclosed, but on the contrary, the intention is to cover all modifications, equivalents and alternatives falling within the scope of the present invention as defined by the appended claims.

The present invention relates to a new microscope integrating an atomic force microscope (AFM) with a light or optical microscope. Optical microscope has ability to image live processes within the depth of a sample. Optical microscope may be limited in terms of resolution. However, its ability to image through the sample allows identification of specific structures or molecules. Components in cells may be identified by using fluorescent marker for example. A complete understanding of structure and function relationships can be elucidated by combining an optical microscope with an atomic force microscope which provides high resolution topographical images.

The device of present invention provides the ability to acquire optical images of the sample while preserving the ability for highest AFM performance in this case high speed AFM topographs.

Figure 2 shows an example of an embodiment of the present invention in which an optical microscope is integrated in an AFM microscope.

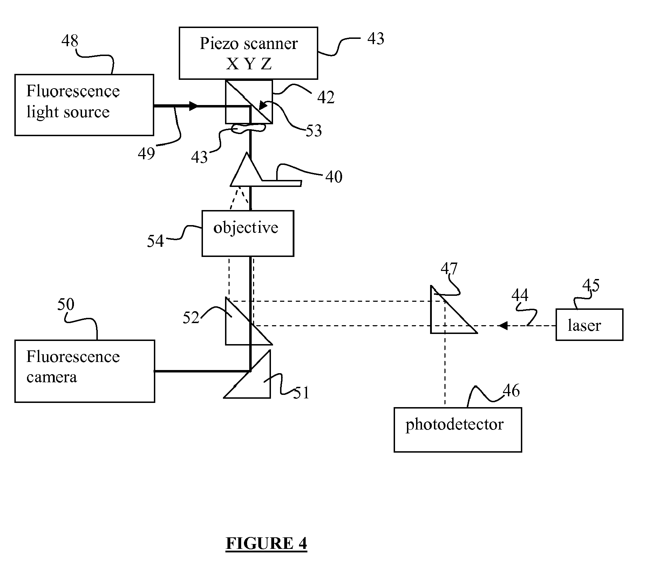

Figure 2 is a simple schematic illustration depicting an AFM structure composed of a processing unit 20, a cantilever 21 and a sample holder 22. The processing unit 20 may include software and equipment suitably configured and controlled to realise a high speed AFM images. Particularly, the processing unit 20 comprises a laser source (not shown) emitting a laser light which is reflected off the back of the cantilever 21 and collected by a position sensitive detector (not shown). According to the invention, the angular displacement of the cantilever 21 is measured while the sample is moved in three dimensions. The displacement of the sample is carried out by a piezoelectric scanner which is illustrated integrated to the sample holder 22 in figure 2. Figure 4 shows an embodiment in which the sample holder is clearly dissociated from the piezoelectric scanner. The sample 23 is suitably arranged on the lower side of the sample holder 22 and is monitored as a function of piezoelectric displacement. Thus, the cantilever 21 displacement is only due to interaction forces between the tip of the cantilever and the sample. This permits maximum displacement sensitivity and maximal AFM performance, in the case of high speed-AFM measuring the surface shape of a specimen at a high speed without tracking consideration. Indeed, in the prior art where the cantilever is monitored, the laser light for detecting deviations of the cantilever has to be also monitored to follow XYZ displacement of the cantilever.

According to the invention, the AFM structure is combined with an inverted microscope. An optical processing unit 24 is connected to a light source 25 and an optical detector 26. The optical processing unit comprises software and material suitably configured to monitor the light source 25 and the optical detector 26. It is possible to contemplate a single processing unit with software suitably configured to monitor AFM components and optical microscope components.

Advantageously, the light source 25 is placed upper or next to the sample so that this sample is illuminated from the sample holder side, underneath the sample. The light beam from the light source 25 passes through the sample holder before reaching the back of the sample. In fluorescence imaging, the light beam excites markers inside the sample. Said markers generate fluorescence beam which is detected by the optical detector 26. On contrary to prior art, the light beam of optical imaging according to the present invention illuminates the back of the sample, whereas the AFM analysis is intended to be realised on the side opposite to the back.

Figure 3 shows a schematic view of a device according to the invention in which the sample 33 is disposed on the top side of the sample holder 32. The AFM processing unit 30 controls the displacement of the sample holder 32 and records the deviation of the cantilever 31. The optical microscope processing unit 34 is connected to an optical source 35 and an optical detector 36. The light beam emitted by the optical source 35 reaches the sample from the bottom. The useful optical signal from the sample 33 is detected by the optical detector 36 which is disposed above the sample 33.

In accordance with a preferred embodiment, figure 4 shows a detailed device according to the invention integrating an AFM with a light microscope. The disclosed embodiment allows the maintaining of the best possible AFM performance, in this case on high speed AFM systems. The combined device is fitted with an independent top/bottom configuration for sample stage and probe control. It is possible to acquire AFM topographs about three, or less, orders of magnitude faster than prior art combined AFM-optical microscopy setups.

Particularly, the combined device of figure 4 comprises a cantilever 40 intended to sense the sample 41 surface. Advantageously, the cantilever 40 is not controlled to scan the sample surface. The sample 41 is securely disposed at the bottom face of a sample holder 42. A piezoelectric scanner 43 is connected to and controls the displacement of the sample holder 42 in three, or less, dimensions X, Y and Z. The sample holder 42 may be integrated into the piezoelectric scanner 43 or secured together in different ways.

The AFM measurement may be performed in vacuum, air or liquid imaging environments. Accordingly, this allows AFM applications to atomic scale in vivo imaging of biological samples in physiological and aqueous environments.

The cantilever deflection measurement is carried out by a laser light 44 from a laser source 45. The laser light is reflected off the back of the cantilever 40 and collected by a position sensitive photodetector 46. A processing unit (not shown) manages the piezoelectric scanner 43, the laser source 45 and the photodetector 46 in order to image atoms and structures of the sample 41 bottom surface. Mirrors 47 and 52 are suitably disposed in order to guide incident and return light beam 44 between the laser source 45, the back side of the cantilever 40 and the photodetector 46.

Advantageously, the combined device further comprises an optical part intended to acquire fluorescence images. As the piezoelectric scanner 43 is disposed above the sample holder, a fluorescence light source 48 of the optical part is arranged on the lateral side of the sample holder 42. In this embodiment, the light beam 49 from the fluorescence light source does not pass through the piezoelectric scanner 43. The light beam 49 feeds the sample holder from a lateral side with respect to the side on which the sample is secured. The sample holder 42 advantageously deviates the light beam 49 towards the back side of the sample so that the sample 41 is illuminated from the back side, on the contrary to prior art devices.

The sample holder 42 according to the present invention is composed of two oppositely oriented prisms glued together. The interface between the two prisms is covered by a metal film that acts like a 90° integrated mirror 53. Therefore, the light beam may be injected from the side. This sample holder allows acquiring optical images of the sample while preserving an independent top/ bottom AFM configuration for sample stage and probe control. When applied to the high-speed AFM, this sample holder allows an easy integration of the high-speed AFM and the light microscopy. The sample holder 42 alone or combined with the piezoelectric scanner may be a removable device.

The fluorescence signal generated by the sample 41 is detected by the fluorescence camera 50 via a mirror 51.

Mounting of the various components of the combined device may be via any conventional, suitable mechanical means.

The AFM combined with the optical microscope according to the present invention is extremely easy to fabricate. Another valuable aspect of the device according to the invention is its 'use'. The particular arrangement of various components provides the ability to integrate the AFM with the light microscopy using the optimal independent top/bottom AFM configuration. This configuration yields the best AFM performance.

The objective 54 has two functions:
(i) observing the sample at higher magnification, and
(ii) focalising the laser on the small size (6micron) high speed-AFM cantilevers.

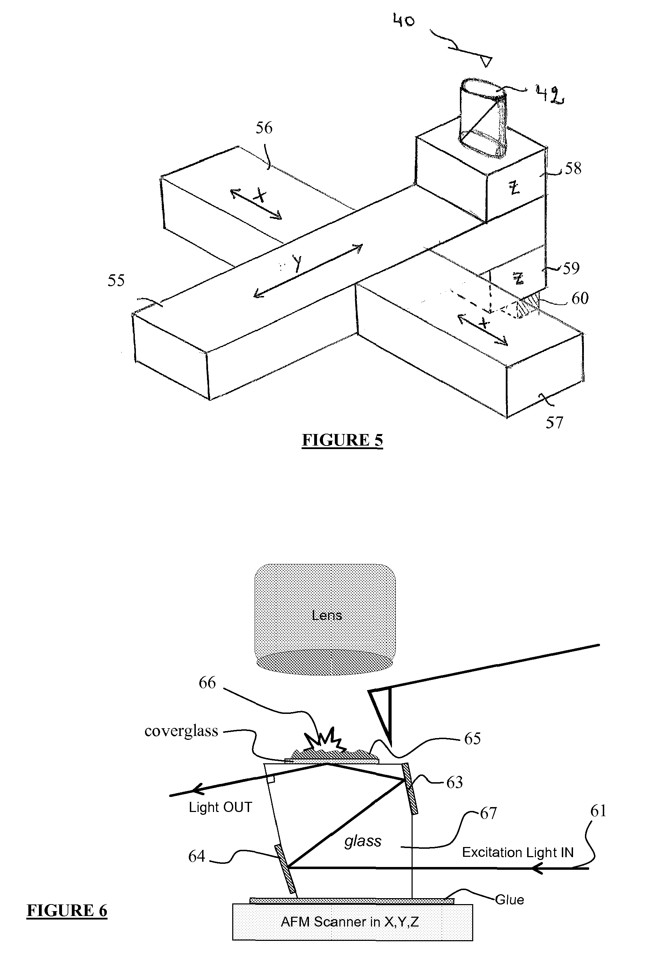

Figure 5 concerns a preferred embodiment of the piezoelectric scanner 43 even if other variant embodiments may be contemplated. The piezoelectric scanner 43 comprises a piezoelectric crystal 55, in form of a parallelepipedic bar, intended to displace the sample holder 42 along a "Y" axis. Two parallelepipedic bars of piezoelectric crystal 56, 57 are disposed, perpendicularly, on lateral sides of the piezoelectric crystal 55 in order to displace the sample holder 42 along a "X" axis.

Two others parallelepipedic bars of piezoelectric crystal 58, 59 are disposed, perpendicularly to "Y" and "X" axis, on lateral sides of the piezoelectric crystal 55 in order to displace the sample holder 42 along a "Z" axis. The piezoelectric crystal 58, 59 are arranged at an end of the piezoelectric crystal 55. The "Z" piezoelectric crystal 58 carries the sample holder 42 facing the cantilever 40.

Advantageously, a counterweight 60 is disposed on the "Z" piezoelectric crystal 59 in order to compensate for the displacement of the sample holder 42. In particular, the counterweight 60 weighs as heavy as the sample holder 42.

According to the invention, a retro-illumination sample support can be envisaged. Particularly interesting is the possibility of performing Total Internal Reflection using the support. In this type of illumination an evanescent light wave is created that limits the fluorescence excitation to the first tens of nanometers away from the support surface. The decrease of background in the Total Internal Reflection allows increasing the optical performance and better tracking the motion of the fluorescence labels. In order to obtain Total Internal Reflection the incident light must hit the sample-base of the support at sufficiently small angles with respect to the plane of the support. This small angle could be achieved performing a series of polishing and metallization of same faces of a glass cube. Figure 6 shows a sample holder 67 comprising two mirrors (polishing and metallization) 63 and 64which guide the excitation light 61 inside the sample holder.

Because of the small incident angle of the excitation light 61 on the base 62 of the sample 65 an evanescent wave of the excitation light 61 is created that better concentrates the fluorescence excitation. The excitation light does not pass through the sample 65 but strikes the back side of said sample 65. Fluorescence emission 66 permits to precisely situate fluorescence label with respect to the whole sample.

The device according to the invention represents an alternative to the 'table top' AFM configuration for the integration of AFM and light microscopy.

The cost of this device is minimal, specially compared with the costly development of 'table top' AFM configurations, and allows maintaining in the AFM an independent top/bottom AFM configuration for sample stage and probe control that provides the best performance on the AFM system.

Numerous variations and modifications will become apparent to those skilled in the art once the above disclosure is fully appreciated. It is intended that the following claims be interpreted to embrace all such variations and modifications.

## Claims

1. A device combining atomic force microscope AFM techniques with optical imaging techniques, said device comprising:
- a sample holder (42),
- an AFM cantilever (40) for measuring the topography of a sample (41) laid on a first side of the sample holder (42),
- an AFM measuring means (45, 46) for measuring the cantilever variations,
- a light source (40) and a light detector (50) for optically imaging the sample (41),
wherein:
- the device comprises a scanning means (43) for moving the sample holder (42) with respect to the AFM cantilever (40), and
- the sample holder (42) is disposed in the light path between the light source and the sample.

2. Device according to claim 1, wherein the sample holder (42) is integrated in the scanning means (43).

3. Device according to claim 1 or 2, wherein the scanning means (43) comprises three dimensional actuators.

4. Device according to any of claims 1 to 3, wherein the scanning means (43) comprises piezoelectric actuators.

5. Device according to any of preceding claims, wherein the light source (48) is a fluorescence light source, the light detector (50) being a fluorescence camera.

6. Device according to any of preceding claims, wherein the light source (48) is arranged so that the light of said light source enters the sample holder (42) from the opposite side to said first side.

7. Device according to any of claims 1 to 5, wherein the light source (48) is arranged so that the light of said light source enters the sample holder (42) from a lateral side.

8. Device according to claim 7, wherein the sample holder (42) includes an integrated mirror (53) for deflecting the entering light (49) which then exits the sample holder from said first side.

9. Device according to claim 7 or 8, wherein the sample holder (42) is composed of two oppositely oriented prisms glued together, the interface between the two prisms being covered by a metal film that acts like a mirror (53).

10. Device according to claim 8 or 9, wherein the mirror (53) deflects light at 90°.

11. Device according to any of claims 1-7, wherein the light source and the sample holder are arranged so that the light strikes according to a Total Internal Reflection the internal surface of said first side.

12. Device according to claim 11, wherein the sample holder includes at least one mirror to deflect light inside the sample holder in order to achieve the Total Internal Reflection.

13. Device according to any of preceding claims, wherein the AFM measuring means comprises a laser source to illuminate the AFM cantilever and a photodetector to detect light coming from the cantilever.

14. Device according to any of preceding claims, wherein the AFM cantilever is arranged below the sample holder, the light source injecting light from a lateral side or opposite side to said first side of the sample holder.
